# EUROPEAN PATENT APPLICATION

(11) **EP 0 594 044 A1**
(43) Date of publication of application: **27.04.1994**
(21) Application number: 93116534.4
(22) Date of filing: 13.10.1993
(51) Int. Cl.: B29C 33/10

(54) **Tire mold with venting means**

(30) Priority: 19.10.1992 US 962758
(71) Applicant: UNIROYAL GOODRICH LICENSING SERVICES, INC., Wilmington, Delaware 19801 (US)
(72) Inventor: Tennant, James, S., Canal Fulton Ohio 44614 (US); Wittenmyer, Glen L., Sterling Ohio 44276 (US); Kreps, Norman D., Massillon Ohio 44646 (US); Bartley, Donald R., Cuyahoga Falls Ohio 44221 (US); Litowich, Larry M., North Canton Ohio 44720 (US)
(74) Representative: Bauvir, Jacques

(57) **Abstract**

A mold includes an upper sidewall plate 312 and a lower sidewall plate 314 for forming sidewall portions of the tire, and also includes a tread ring portion 316. The tread ring portion 316 and the sidewall plate portions 312,314 are moved into close proximity or engagement (with the tread ring portion) in order to form a portion of a cavity for shaping the tire to be molded. Each of the tread ring segments 316 includes a plurality of pockets 320, 322, 324, 326 and 328 for defining a respective plurality of circumferentially arranged tread elements in the tire. Circumferentially arranged pockets 320, 322, 324, 326 and 328 are fluidly connected with one another so that any fluid trapped in any one respective pocket may be removed.

## Description

### Technical Field :

The present invention relates to a tire mold, to a method for molding a tire and to a resulting vehicle tire. In particular, the present invention relates to improvements in vacuum molding the tire.

### Description of the Prior Art :

Vacuum molding a tire is known. U.S. Patent No. 4,573,894 discloses a tire mold having a cavity for receiving and shaping the tire. The cavity is defined by a surface for contacting the exterior of the tire during a tire curing cycle. The cavity is fluidly connected with a vacuum source for evacuating fluid from within the cavity during the early portion of a tire curing cycle. This evacuation process prevents fluid from becoming trapped between the tire and the surface defining the cavity. Visual defects in the form of voids in the tire exterior are, thus, eliminated. Furthermore, optimal curing contact between the surface defining the cavity and the exterior of the tire results. The advantages of such a vacuum molding system are recognized and are evidenced by the increasing use of vacuum molding in the tire curing art.

A tire mold cavity typically includes a plurality of projections which define pockets in the mold. The pockets form ground engaging tread elements about the outer circumference of the tire. U.S. Patent No. 4,881,881 discloses an improvement to the vacuum molding system by venting laterally or circumferentially adjacent pockets through specially shaped arch-vent passages formed in the projections. Fluid may communicate between adjacent pockets and then to the vacuum source so the fluid does not become trapped in a pocket. Thus, a ground engaging tread element free from visual defects is provided by the use of arch-vent passages in the vacuum molding system.

Venting through an arch-vent passage has proved advantageous in a tire production environment. However, the use of the arch-vent passage has practical limitations. On a tire having a groove wider than approximately one-half inch, problems may arise during removal of the cured tire from the tire mold. Such a relatively wide groove is often found extending circumferentially on a performance tire or a light truck tire. The problem arises because an arch-vent remnant formed by cured rubber extending into the arch-vent passage may be sheared off during removal of the cured tire from the mold. This is a particular problem when the arch-vent passage is located in or near a plane extending radially of the tire.

The sheared-off arch-vent remnant then may fall into the bottom of the cavity in the tire mold. The arch-vent remnant then is cured into the subsequent tire that is placed in the tire mold which results in a visual defect referred to as a blemish. Thus, it will be apparent that it is desirable to produce a tire without any arch-vent remnants extending across such relatively wide and circumferentially extending groove in a tire.

### Summary of the Invention :

The present invention is directed to an improved tire mold and to an improved method for vacuum molding a tire that is free from arch-vent remnants in circumferentially extending grooves in the tire. In a tire mold embodying the present invention, a plurality of mold parts are radially separable about cooperating surfaces of the respective mold parts. The cooperating surfaces define a parting line region. Each of the mold parts also includes a surface defining a portion of a cavity for receiving and shaping an uncured tire. Each of the mold parts further includes a plurality of circumferentially arranged pockets associated with the cavity and which define a plurality of circumferentially arranged ground engaging tread elements on the tire.

The improvement to the tire mold of the present invention comprises vacuum means in fluid communication with the cavity of the tire mold. The vacuum means evacuates fluid from the cavity in the tire mold. Vent means fluidly connects a pair of circumferentially adjacent pockets. Passage means is associated with one of the mold parts. The passage means provides fluid communication between the vacuum means and one of the pair of circumferentially adjacent pockets which are connected by the vent means.

The present invention is adaptable to vacuum molding in a sectional or segmental type of mold.

### Brief Description of the Drawings :

Further features of the present invention will become apparent to those skilled in the art to which the present invention relates from reading the following specification with reference to the accompanying drawings, in which :
Fig. 1 is a cross-sectional view of a portion of a tire mold embodying the present invention;
Fig. 2 is a panoramic view of a portion of the tire mold in Fig. 1, taken approximately along line 2-2 in Fig. 1;
Fig. 3 is an enlarged view of a portion of the tire mold in fig. 1;
Fig. 4 is an enlarged side view of an arch-vent of the tire mold in Fig. 2, taken approximately along line 4-4 in Fig. 2;
Fig. 5 is a plan view of the arch-vent illustrated in Fig. 4, taken along approximately line 5-5 in Fig. 4;
Fig. 6 is a partial perspective view of a portion of a tire formed in the mold embodying the present invention;
Fig. 7 is a cross-sectional view of a portion of the tire illustrated in Fig. 6, taken approximately along line 7-7 in Fig. 6;
Fig. 8 is a view similar to Fig. 3, illustrating a plugged vent passage restrictor;
Fig. 9 is a view similar to Fig. 8, illustrating removal of the plugged vent passage restrictor from the vent passage;
Fig. 10 is a perspective view of a mold of another embodiment of the present invention;
Fig. 11 is a crosssectional view of a portion of a segmental mold of the alternate embodiment;
Fig. 12 is a top view of one of the segments of the mold of Fig. 11, taken approximately along line 12-12 in Fig. 11.

### Description of Preferred Embodiments :

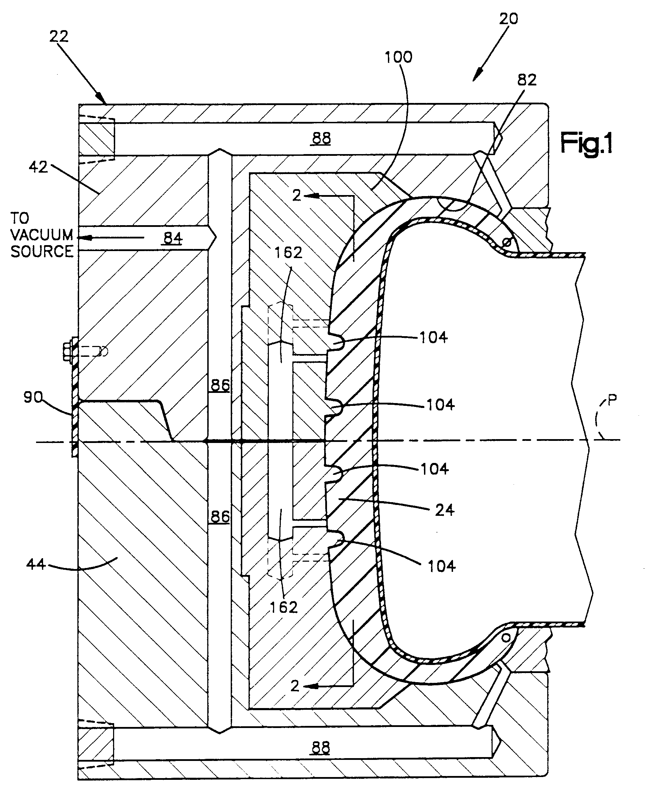

A vacuum molding system 20 embodying the present invention for molding an elastomeric article, such as a tire, is illustrated in Fig. 1. The vacuum molding system 20 includes a tire mold 22 for curing the tire 24. The tire mold 22 is operatively connected with a vacuum source (not shown) through suitable piping. The operation of the vacuum molding system 20 is disclosed in U.S. Patent No. 4,573,894, the specification of which is incorporated herein by reference.

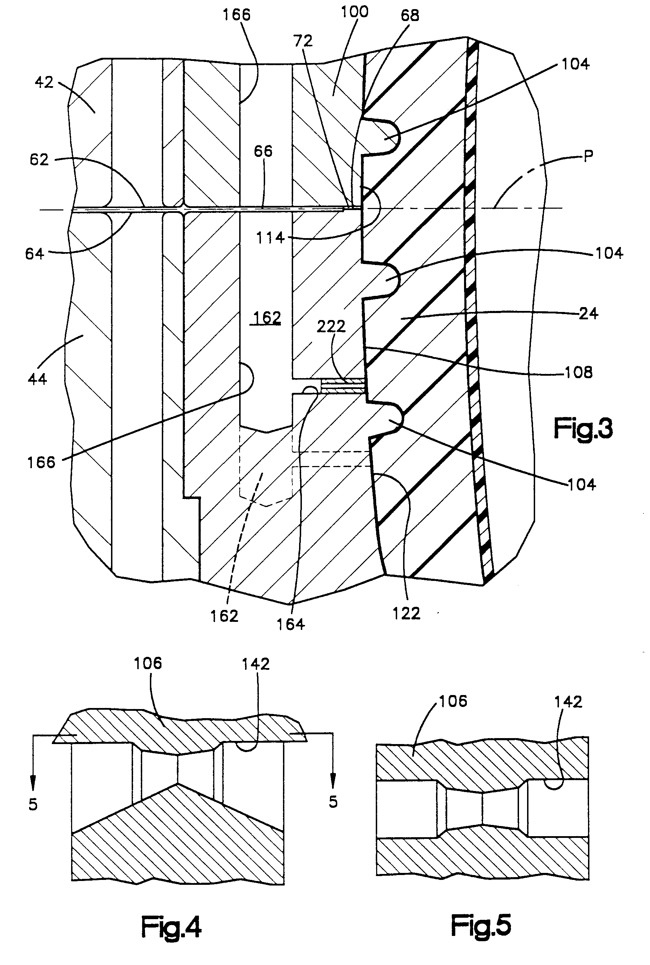

The tire mold 22 is a two piece type of mold. It will be apparent that other types of tire mold may equally embody the features of the present invention. The tire mold 22 includes upper and lower mold halves 42,44. The upper mold half 42 includes a lowermost surface 62 (best seen in Fig. 3). The lower mold half 44 includes an uppermost surface 64.

Together, the surfaces 62,64 cooperate with each other to at least partially define a closed chamber 66. The mold half 44 includes a register surface 68 which projects approximately .050 inch from the uppermost surface 64. The register surface 68 engages the lowermost surface 62 to space apart the lowermost surface 62 from the uppermost surface 64 about .050 inch. A plurality of grooves 72 (only one shown) of aproximately .025 inch are machined in the register surface 68.

Thus, the surfaces 62,64 are spaced a slight distance apart as viewed in Fig. 3, when the tire mold 22 is fully closed to define the chamber 66. The surfaces 62,64,68 also define a parting line region about which the tire mold halves 42,44 are separable. The parting line region extends in a direction substantially parallel to the mid-circumferential plane P of the tire 24.

The tire mold halves 42,44 include surfaces which define a cavity 82 (Fig. 1) for receiving and shaping the uncured tire 24. The grooves 72 and chamber 66 are in fluid communication with the cavity 82 because the grooves terminate in the cavity. A series of passages 84,86,88 are formed in the tire mold 22. The passages 84,86,88 are in fluid communication with the vacuum source.

The passage 86 in the upper mold half 42 fluidly connects the chamber 66 with the vacuum source. Thus, the cavity 82 is in fluid communication with the vacuum source. An elastomeric seal 90 is attached to the mold half 42 and defines the remainder of the chamber 66. The seal 90 effectively closes off the chamber 66 and cavity 82 from the atmospheric pressure immediately adjacent the exterior of the tire mold 22. Thus, as the mold is being closed or is closed, vacuum from the vacuum source can be applied efficiently to the chamber 66, the grooves 72 and the cavity 82.

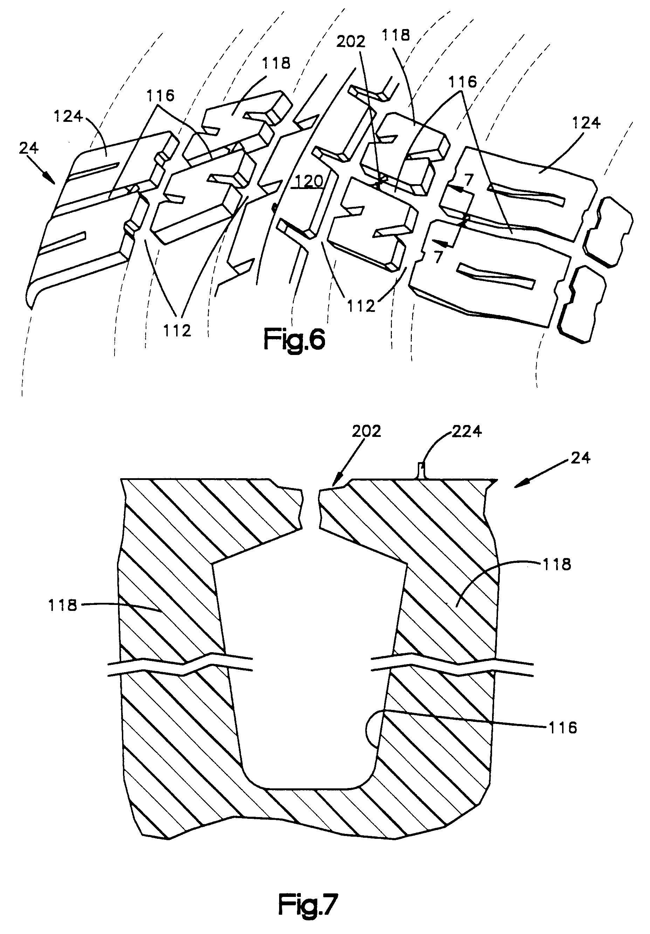

The tire mold 22 also includes a tread ring 100 for forming a tread in the tire 24. The tread ring 100 includes a plurality of projections 104,106 (Figs. 1, 2 and 3) which define grooves in the tread of the tire 24 at a location other than at the parting line of the tire mold 22. Four projections 104 are illustrated, but it will be apparent that any number of projections may be used depending on the desired tread pattern of the tire 24. The projections 104 define circumferentially extending grooves 112 (Fig. 6) in the tire 24. The axially innermost grooves 112 of the tire 24 define a circumferential and substantially continuous ground engaging central rib 120 in the tread.

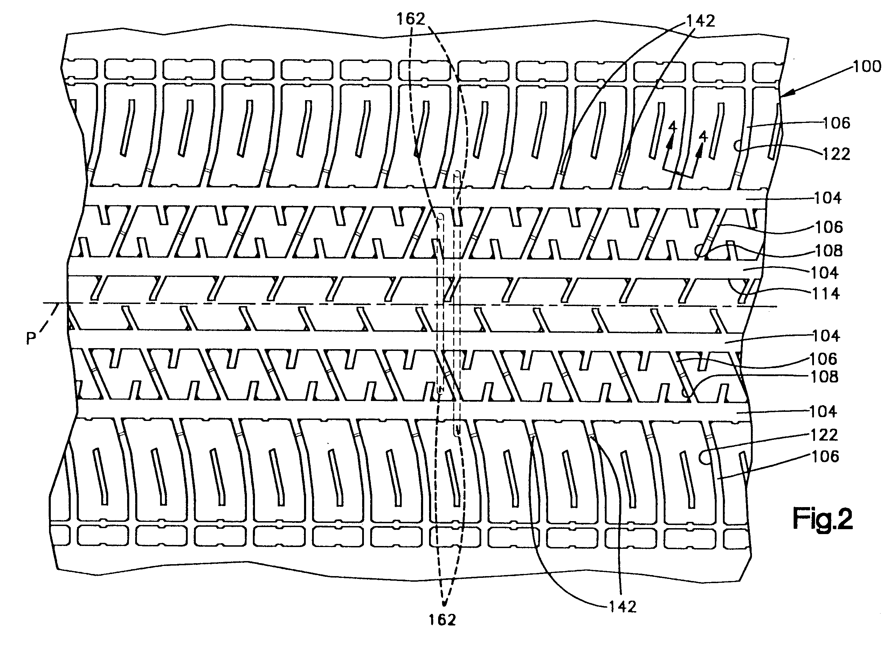

The projections 106 (Fig. 2) define transversely extending grooves 116 in the tire 24. Cooperating projections 104,106 define a plurality of pockets 108,122 (Fig. 2) in the tread ring 100. Each pocket 108 defines a respective ground engaging tread element 118 (Fig. 6) on the tire 24. Each pocket 122 defines a respective ground engaging tread element 124 on the tire 24. A plurality of circumferentially arranged pockets 108,122 are located in the tread ring 100 to define a respective plurality of circumferentially extending ground engaging tread elements 118,124.

A central pocket 114 (Figs. 2 and 3) is provided in the tire mold 22 to define a continuous circumferentially extending rib 120 (Fig. 6) on the tire 24. The central pocket 114 of the tire mold 22 is continually in fluid communication with the chamber 66. Thus, virtually all fluid in the central pocket 114 may be removed during the evacuation cycle.

In order to fluidly connect circumferentially adjacent pockets 108 or 122, an arch-vent passage 142, as illustrated in Figs. 4 and 5, is provided. The use and design of the arch-vent passage 142 is disclosed in U.S. Patent No. 4,881,881, the specification of which is incorporated herein by reference. Preferably, each pair of circumferentially adjacent pockets 108 or 122 in the tread ring 100 is fluidly connected by a respective arch-vent passage 142, as illustrated in Fig. 2.

The tire mold 22 also includes a plurality of fluid passages 162 (Figs. 2 and 3). The passages 162 fluidly connect each circumferentially arranged pocket 108,122 of the cavity 82 with the chamber 66 and, thus, the vacuum source. Preferably, there are at least four fluid passages 162 which are circumferentially spaced substantially equidistant about the tire mold 22 for each circumferentially arranged plurality of pockets 108 or 122.

The fluid passage 162 is a "blind" passage. A "blind" passage is defined herein as including a straight passage 164 drilled from the cavity 82 radially outwardly of the tire mold 22. Another straight passage 166 is drilled through the surface 62,64, respectively, to intersect the passage 164 at an angle of approximately between 45° and 135°.

In the illustrated embodiment, the passages 164,166 intersect at essentially a right angle. While just the lower mold half 44 is illustrated in detail as having passages 162,164,166 formed therein, it should be apparent that the upper mold 42 has similar passages.

During the tire molding operation, vacuum is applied to the passages 84 and 86. The chamber 66 and grooves 72 fluidly communicate the passage 86 with the passage 162 so vacuum can also be applied to each pocket 108,122 in the cavity 82. Since each plurality of circumferentially arranged pockets 108 or 122 is fluidly connected by an arch-vent passage 142, all of the pockets are evacuated.

The fluid passage 162 enables the evacuation of fluid from each pocket 108,122. The fluid passage 162 eliminates the need for an arch-vent passage fluidly connecting any pair of laterally adjacent pockets 108 and 122. Thus, the tire mold 22 does not require an arch-vent passage to extend through the projections 104 which define the circumferentially extending grooves 112 in the tire 24.

As a result, the tire 24 has no broken arch-vent remnants remaining in any circumferential groove in the tread of the tire 24. A broken arch-vent remnant 202 (Fig. 7) occurs when uncured elastomeric material flows into an arch-vent passage 142 during a tire molding operation. The elastomeric material located in the arch-vent 142 then cures. During removal of the tire 24 from the tire mold 22, the cured elastomeric material in the arch-vent passage 142 breaks. A tire 24 free of arch-vent remnants in the circumferentially extending grooves not only enhances the appearance of the tire 24 but enables the vacuum molding of tires with relatively wide grooves.

A restrictor plug 222 (Fig. 3) is located in the end of the passage 164 adjacent the cavity 82. The restrictor plug 222 merely reduces the flow area that uncured elastomeric material may flow into. A small amount of elastomeric material cures in the restrictor plug 222 to form a vent projection 224 (Fig. 7). The presence of only a few circumferentially spaced vent projections 224 extending from the tire 24 does not detract from the overall appearance of the tire. The few vent projections 224 may be readily removed if desired.

It is known in the tire curing industry that vent passage restrictor plugs 222 sometimes become clogged with cured rubber. Formerly, restrictor plugs were used only in straight passages. It is generally possible to contact a clogged restrictor plug with a tool inserted through the straight passage in the back of the mold and force out the clogged restrictor plug. However, it will be apparent with the blind passage arrangement embodying the present invention, it is virtually impossible to directly contact a clogged restrictor plug with a suitable tool.

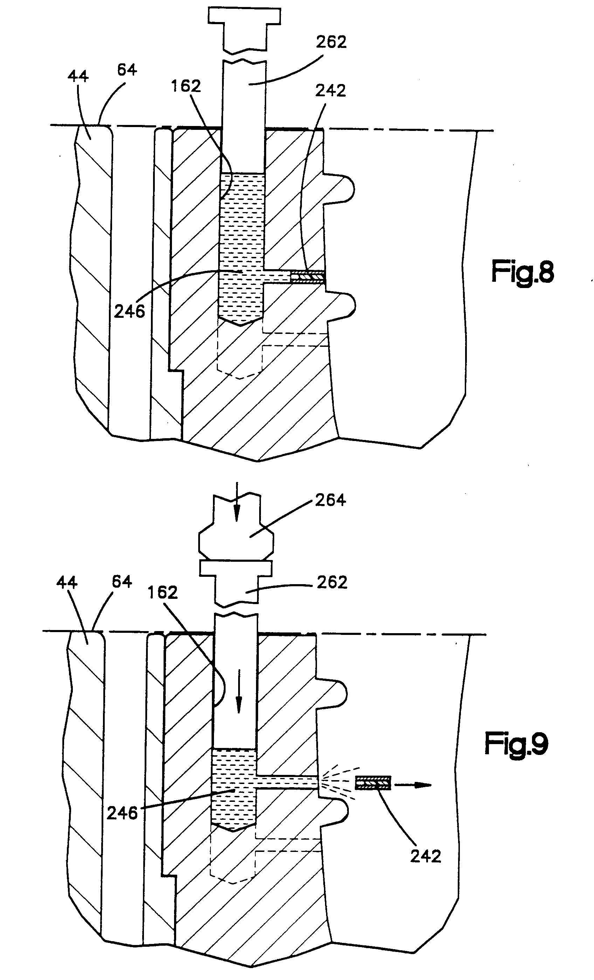

Thus, in order for the present invention to be successfully applied to a tire production environment, a method has been devised to remove a clogged restrictor plug from a mold embodying the present invention. To remove a clogged vent passage restrictor plug 242 (Fig. 8) from the mold half 44, an incompressible fluid, such as oil 246, is placed in the passage 162 associated with the clogged restrictor plug. It may be necessary to reorient the mold half 44 in order to accomplish the effective filling of the passage 162 with oil 246. The clogged vent plug restrictor 242 is contacted by the oil 246. The oil 246 is preferably used in such quantity that the oil substantially fills at least half the volume of the passage 162.

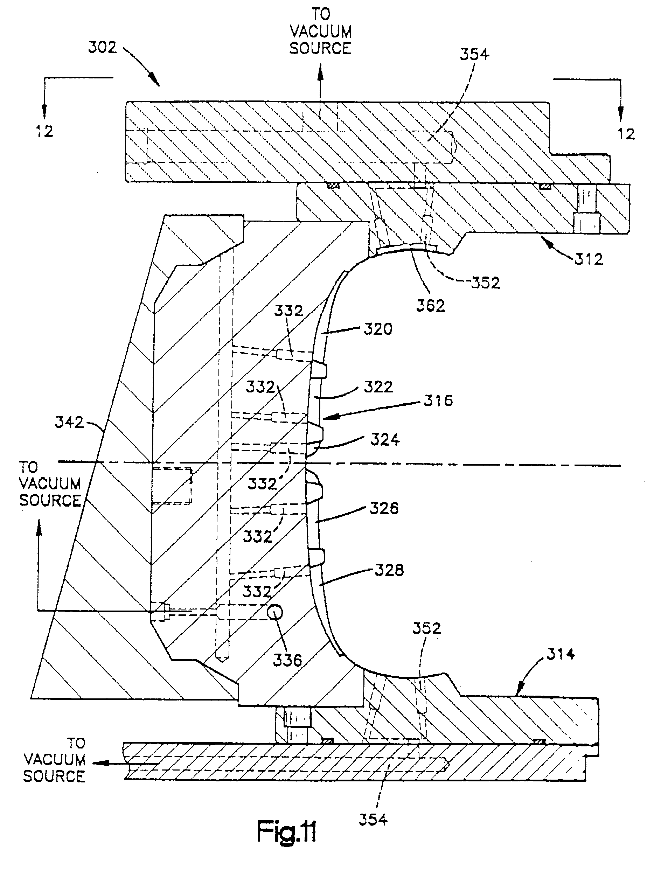

A tool 262 (Fig. 9) having a piston like function is then inserted into the unclogged end of the passage 162 at a location away from the clogged restrictor plug 242. The tool 262 is then advanced in the passage 162 to pressurize the oil 246. The tool is advanced with sufficient force such as by the impact of a hammer 264, so that the oil 246 develops a relatively high fluid pressure within the passage 162. The fluid pressure is transferred to the clogged restrictor plug 242 through the oil 246. When the fluid pressure in the oil 242 increases to a sufficiently high level within the passage 162, the restrictor plug 242 is forced out of the passage portion 164.

Care must be taken that the clogged restrictor plug 242 does not shoot out of the passage portion 164 like a projectile. A rag is preferably placed over the clogged restrictor plug 242 to exert sufficient stopping force on the freed restrictor plug 242. A new restrictor plug may then be placed in the passage portion 164 and the tire mold 22 can be placed back into production.

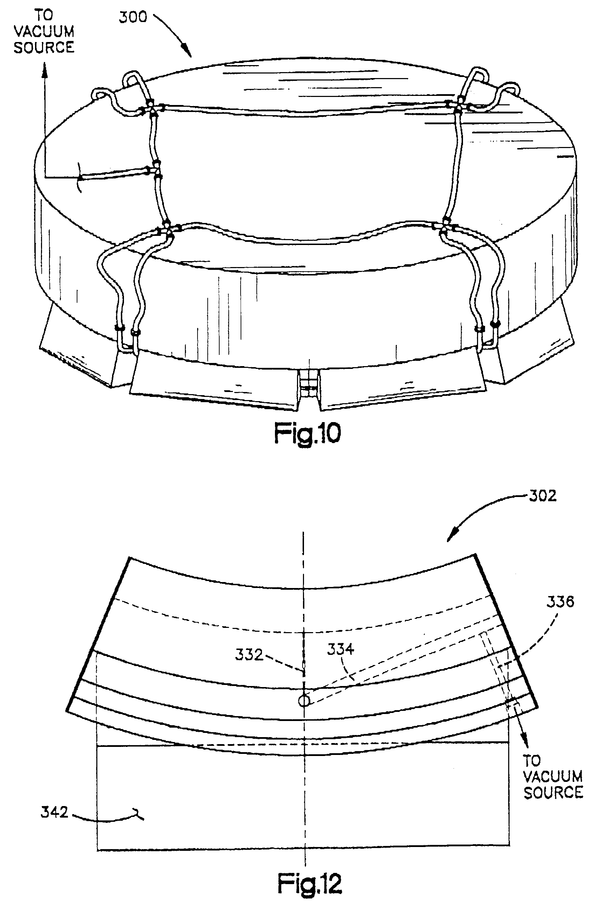

A vacuum molding system 300 (Fig. 10) according to an alternate embodiment of the present invention is illustrated in Fig. 10. The alternate embodiment essentially encompasses a vacuum molding system adapted for use with "sectional" or "segmental" types of molds. For example, instead of a mold of a two piece or clam shell type as illustrated in Fig. 1, a vacuum molding system 300 may include approximately eight segments 302 (Figs. 11 and 12). Each of the segments 302 are separable about generally radially disposed surfaces or parting lines. This segmental type of vacuum molding system 300 has certain advantages, especially when used for relatively wide steel belted radial tires, in that less "lifting" of the tire in the mold is needed. Lifting is defined as the radial outward movement of an uncured tire to fill the mold cavity of a tire mold. Thus, less internal deformation and movement of components is realized with less lifting.

Each mold 300 includes an upper sidewall plate 312 (Fig. 11) and a lower sidewall plate 314 for forming sidewall portions of the tire. The sidewall plates 312,314 are located at axially opposite ends or sides of the mold 300 and have a surface each of which defines at least a portion of a sidewall of the tire to be molded. Each mold segment 302 also includes a tread ring portion 316. The tread ring portion 316 and the sidewall plate portions 312,314 are moved into close proximity or engagement (with the tread ring portion) in order to form a portion of a cavity for shaping the tire to be molded.

Each of the tread ring segments 316 includes a plurality of pockets for defining a respective plurality of circumferentially arranged tread elements in the tire. As described above for the molding system 20, circumferentially arranged pockets 320, 322, 324, 326 and 328 are fluidly connected with one another so that any fluid trapped in any one respective pocket may be removed as will be described hereinbelow. This removal of trapped air permits an aesthetically pleasing appearance in a cured tire and which does not require any post curing operation in order to remove vent remnants, as would normally occur in typical molding operations.

Each tread ring segment 316 has a passage 332 in fluid communication with at least one of the pockets 320, 322, 324, 326 or 328. This passage 332 extends radially outwardly into the tread ring segment 316. An axial passage 334 connects one or more of the passages 332 within a tread ring segment 316 for fluid communication. The axial passage 334 is in fluid communication with a radial passage 336 which is connected with a vacuum source. Thus, any fluid, such as air or water, trapped between the surface defining the cavity of the tire mold and a tire to be cured and which is located in any of the pockets is removed by the vacuum or negative pressure applied in the system 300. Each of the tread ring segments 316 also has an inclined surface 342 connected thereto which is engagable with an actuator ring (not shown) in order to move, force or retain each of the tread ring segments during a molding operation cycle. The actuator ring moves axially relative to the mold and tire and also has an inclined surface for engagement with surface 342.

Each of the sidewall plates 312,314 is also in fluid communication with the cavity or inner surface of the tire mold. Specifically, passages 352 are in fluid communication with passages 354. The passages 354 are in fluid communication with a vacuum source, which may be the same vacuum source used for evacuation of the tread ring 316. One of the sidewall plates (in this case, the upper sidewall plate 312) includes a pocket or plurality of pockets for defining an item of the tire such as a white sidewall or raised white letter or other indicia of the tire. Thus, each of the sidewalls of the tire and any indicia may also be evacuated by vacuum so that no fluid, such as water or air is trapped in between the axially outer surface of the tire and the inner surface of the mold cavity in order to yield a good quality cure tire by having all of the mold cavity surfaces in engagement with the tire.

From the above description of preferred embodiments of the invention, those skilled in the art will perceive improvements, changes and modifications. Such improvements, changes and modifications within the skill of the art are intended to be covered by the appended claims.

## Claims

1. A tire mold comprising:
a plurality of mold segments arranged around a mold axis, each mold segment having cooperating surfaces for cooperative surface to surface engagement of the mold segment with adjacent mold segments, the mold segments being separable from their surface to surface engagement along respective parting line regions extending substantially radially to the mold axis, and each mold segment including a surface for defining a portion of a cavity for receiving a tire to be cured, and the mold segments together forming a plurality of circumferentially arranged pockets which cooperate with the tire to be cured to define a plurality of ground engaging tread elements in the tire; vacuum means in fluid communication with the cavity formed by the mold segments for evacuating fluid from the cavity;
vent means for fluidly connecting together only respective pairs of circumferentially arranged pockets which are circumferentially adjacent to one another; and passage means providing fluid communication between said vacuum means and a selected one of the circumferentially arranged pockets of each of the respective pairs of circumferentially arranged pockets connected by said vent means.

2. The tire mold set forth in claim 1 wherein each mold segment includes a projection portion, the projection portions of the mold segments together collectively forming a projection extending into the cavity for defining a continuous circumferential groove in a tire cured in the tire mold, and said passage means provides fluid communication between said vacuum means and said selected ones of the circumferentially arranged pockets so that the projection is substantially free from bridge vent remnants.

3. The tire mold set forth in claim 1 wherein said passage means comprises at least one blind passage formed in a mold part by a pair of drilled openings intersecting at an angle of between 45° and 135°.

4. The tire mold set forth in claim 1 further including restrictor plug means located in an end portion of said passage means adjacent the cavity.

5. The tire mold set forth in claim 1 wherein said vent means comprises an arch-vent.

6. The tire mold set forth in claim 1 wherein said parting line region is disposed in a radial plane relative to the axis of rotation of the tire to define a tread ring region of a segmented type of mold.

7. The tire mold set forth in claim 6 wherein said segmented type of mold includes at least three segments.

8. The tire mold set forth in claim 7 further including a pair of sidewall plates located at axially opposite ends of said mold for forming respective sidewall portions of the tire.

9. The tire mold set forth in claim 8 further including passage means for communicating said vacuum means with a surface of said sidewall plate for engaging a sidewall of a tire to evacuating fluid from between said sidewall plate and a sidewall of a tire to be cured in said mold.
